Europäisches Patentamt

European Patent Office

Office européen des brevets

(19)

(11) Publication number: **0 160 949**

**A2**

(12) **EUROPEAN PATENT APPLICATION**

(21) Application number: **85105426.2**

(22) Date of filing: **03.05.85**

(51) Int. Cl.⁴: **F 02 D 41/34**
**F 02 D 41/36**

(30) Priority: **07.05.84 JP 89244/84**

(43) Date of publication of application:
**13.11.85 Bulletin 85/46**

(84) Designated Contracting States:
**DE FR GB**

(71) Applicant: **TOYOTA JIDOSHA KABUSHIKI KAISHA**
**1, Toyota-cho Toyota-shi**
**Aichi-ken 471(JP)**

(72) Inventor: **Koboyashi, Nobuyuki**
**c/o TOYOTA JIDOSHA K.K. 1, Toyota-cho**
**Toyota-shi Aichi-ken(JP)**

(72) Inventor: **Hattori, Takashi**
**c/o TOYOTA JIDOSHA K.K. 1, Toyota-cho**
**Toyota-shi Aichi-ken(JP)**

(74) Representative: **Grams, Klaus Dieter, Dipl.-Ing. et al,**
**Patentanwaltsbüro Tiedtke-Bühling-Kinne-**
**Grupe-Pellmann-Grams-Struif Bavariaring 4**
**D-8000 München 2(DE)**

(54) **Method and apparatus for controlling air-fuel ratio in sequential injection type internal combustion engine.**

(57) In a sequential injection type internal combustion engine, a fuel amount is calculated for each cylinder and a fuel increment is calculated in accordance with a predetermined parameter of the engine. A fuel supply start timing and a fuel supply end timing for each cylinder are calculated in accordance with the fuel amount for the corresponding cylinder and the fuel increment currently calculated.

Fig. I

EP 0 160 949 A2

## METHOD AND APPARATUS FOR CONTROLLING
## AIR-FUEL RATIO IN SEQUENTIAL INJECTION TYPE
## INTERNAL COMBUSTION ENGINE

BACKGROUND OF THE INVENTION

1) Field of the Invention

The present invention relates to a method and apparatus for controlling the air-fuel ratio in a sequential injection type internal combustion engine, in which fuel injection is carried out at separate injection timings for each cylinder.

2) Description of the Related Art

In general, in a sequential fuel injection-type internal combustion engine, a base fuel injection amount is calculated at separate timings for each cylinder in accordance with the intake air pressure (or the intake air amount) and the engine speed. In addition, the base fuel injection amount is corrected by other parameters of the engine, such as the coolant temperature and the intake air temperature. The corrected fuel amount is injected near the suction stroke of each cylinder, thus providing the desired fuel amount for each cylinder.

In the above-mentioned sequential injection type engine, when asynchronous or synchronous fuel increments are required due to an acceleration mode or the like, incremental fuel is injected into all the cylinders. That is, incremental fuel is injected into the cylinders regardless of the strokes. Therefore, fuel injection is performed for strokes other than the suction stroke of some cylinders.

Since fuel injection is performed upon some cylinders which require no fuel, fuel is adhered to the intake air pipe walls and the like of these cylinders. After that, the adhered fuel is supplied to the cylinders. As a result, the controlled air-fuel ratio becomes rich, thus reducing the fuel consumption efficiency and increasing the hydrocarbon, carbon dioxide, and other exhaust gas emissions.

## SUMMARY OF THE INVENTION

It is an object of the present invention to provide a method and apparatus for controlling the air-fuel ratio in a sequential injection type internal combustion engine which improves the fuel consumption efficiency and reduces the exhaust gas emissions.

According to the present invention, in a sequential injection type internal combustion engine, fuel amount is calculated for each cylinder and the fuel increment calculated in accordance with a predetermined parameter of the engine. A fuel supply start timing and a fuel supply end timing for each cylinder are calculated in accordance with the fuel amount for the corresponding cylinder and the fuel increment currently calculated. As a result, injection of incremental fuel is performed upon only the cylinders which require fuel injection. No injection of incremental fuel is performed upon the other cylinders which do not require fuel injection.

## BRIEF DESCRIPTION OF THE DRAWINGS

The present invention will be more clearly understood from the description as set forth below with reference to the accompanying drawings, wherein:

Fig. 1 is a schematic diagram of an internal combustion engine according to the present invention;

Fig. 2, 3, 4, and 5 are flow charts showing the operation of the control circuit of Fig. 1; and

Fig. 6 is a graph for explaining the flow charts of Figs. 2, 3, 4, and 5.

## DESCRIPTION OF THE PREFERRED EMBODIMENTS

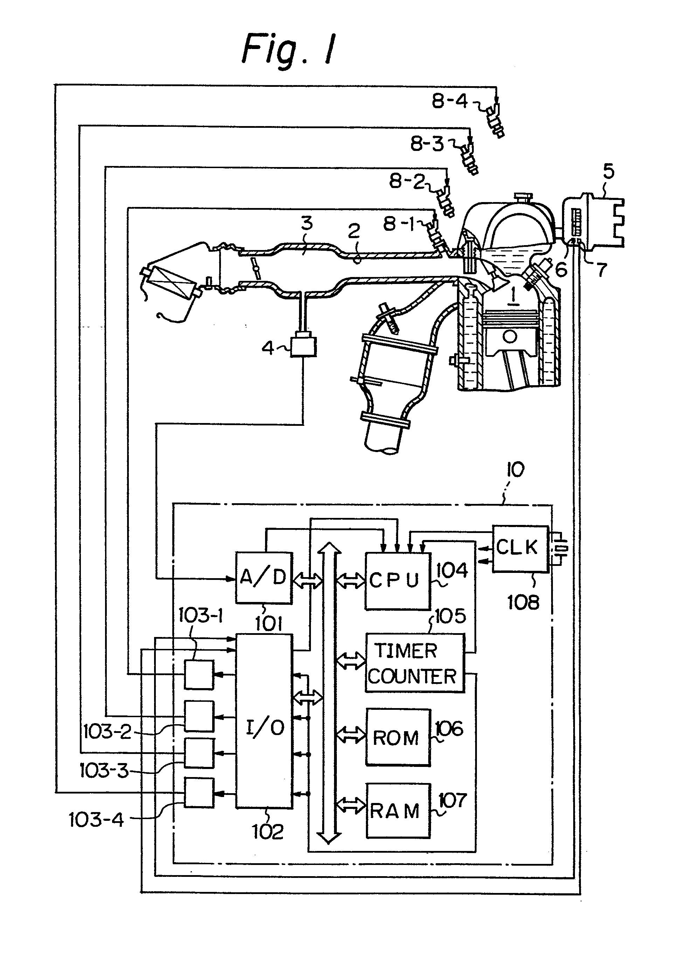

In Fig. 1, which illustrates a sequential injection type internal combustion engine according to the present invention, reference numeral 1 designates a four-cycle spark ignition engine disposed in an automotive vehicle. Provided in an air-intake passage 2 of the engine 1 is a surge tank 3 in which a pressure sensor 4 is provided.

The pressure sensor 4 is used for detecting the absolute pressure within the multiplexer-incorporating analog-to-digital (A/D converter 101 of control circuit 10.

Disposed in a distributor 5 are crank angle sensors 6 and 7 for detecting the angle of the crankshaft (not shown) of the engine 1. In this case, the crank-angle sensor 6 generates a pulse signal at every 720° crank angle (CA) while the crank-angle sensor 7 generates a pulse signal at every 30°CA. The pulse signals of the crank angle sensors 6 and 7 are supplied to an input/output (I/O) interface 103 of the control circuit 10. In addition, the pulse signal of the crank angle sensor 7 is then supplied to an interruption terminal of a central processing unit (CPU) 104.

Additionally provided in the air-intake passage 2 are fuel injectors 8-1, 8-2, 8-3, and 8-4 for supplying pressurized fuel from the fuel system (not shown) to the air-intake ports of the first, second, third, and fourth cylinders of the engine 1. In this case, other fuel injectors are also provided for other cylinders, though not shown in Fig. 1.

The control circuit 10, which may be constructed by a microcomputer, includes driver circuits 103-1, 103-2, 103-3, and 103-4 for driving the fuel injectors 8-1, 8-2, 8-3, and 8-4 a timer counter 105, a read-only memory (ROM) 106 for storing a main routine, interrupts routines such as a fuel injection routine, an ignition timing routine, tables (maps), constants, etc., a random-access memory (RAM) 107 for storing temporary data, a clock generator 108 for generating various clock signals, and the like, in addition to the A/D converter 101, the I/O interface 102, and the CPU 104.

The timer counter 105 may include a free-run counter, a compare register, a comparator for comparing the content of the free-run counter with that of the compare register, flag registers for compare interruption, injection control, and the like. Of course, the timer counter 105 also may include a plurality of compare registers and a plurality of comparators. In this case, the timer counter 105 is used for controlling the injection start and end operation.

Interruptions occur at the CPU 104 when the A/D converter 101 completes an A/D conversion and generates an interrupt signal; when the crank angle sensor 7 generates a pulse signal; when the timer counter 105 generates a compare interrupt signal; and when the clock generator 108 generates a special clock signal.

The pressure data PM of the pressure sensor 4 is fetched by an A/D conversion routine executed at every predetermined time period and is then stored in the RAM 107. That is, the data PM in the RAM 107 is renewed at every predetermined time period. The engine rotational speed Ne is calculated by an interrupt routine executed at 30°CA, i.e., at every pulse signal of the crank angle sensor 7, and is then stored in the RAM 107.

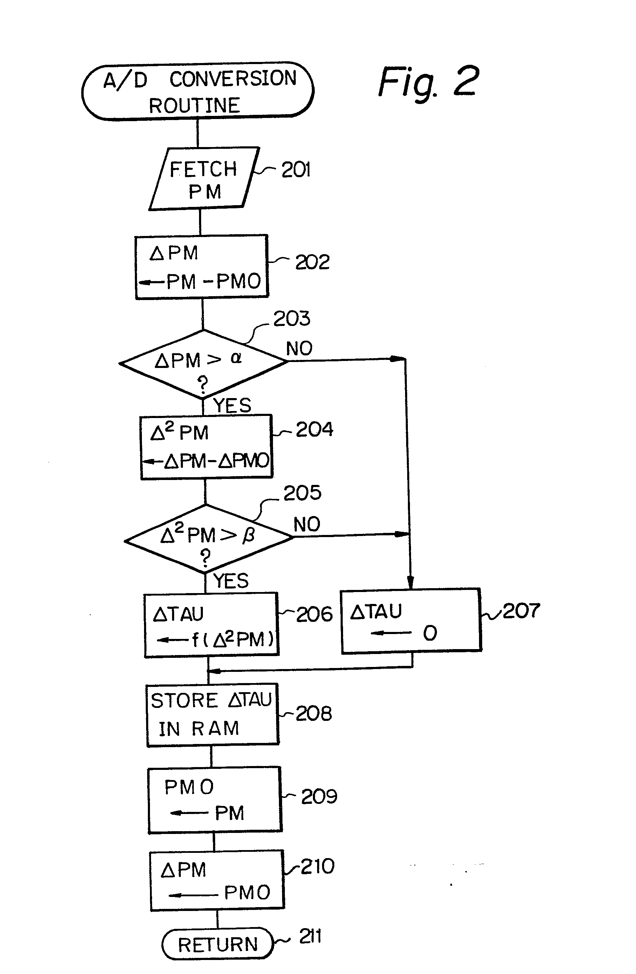

The operation of the control circuit 10 of Fig. 1 will be explained with reference to the flow charts of Figs. 2 through 5.

Figure 2 is an A/D conversion routine executed at predetermined time periods.

At step 201, intake air pressure data PM is fetched from the pressure sensor 4 via the A/D converter and is stored in the RAM 107. That is, the data PM is renewed at predetermined time periods. At step 202, a primary differential value $\Delta$PM of the data PM is calculated by:

$$\Delta PM \leftarrow PM - PMO$$

where PMO is the intake air pressure data fetched at the previously executed A/D conversion routine. At step 203, it is determined whether or not $\Delta$PM > $\alpha$ is satisfied. Assume, for example, the value of $\alpha$ is 0. As a result, if $\Delta$PM $\leq$ $\alpha$, then the control proceeds to step 207, in which the fuel increment TAU is caused to be 0, while if $\Delta$PM > $\alpha$, the control proceeds to step 204.

At step 204, a second differential value $\Delta^2$PM of

the data PM is calculated by:

$$\Delta^2 PM \leftarrow \Delta PM - \Delta PM0$$

where $\Delta PM0$ is the primary differential value of the data PM calculated at the previously executed A/D conversion routine. At step 205, it is determined whether or not $\Delta^2 PM > \beta$ is satisfied.

Assume, for example, the value of $\alpha$ is a small positive value. As a result, if $\Delta^2 PM \leq \beta$, then the control proceeds to step 207, in which the fuel increment $\Delta TAU$ is caused to be 0, while if $\Delta^2 PM > \beta$, the control proceeds to step 206.

At step 206, the fuel increment $\Delta TAU$ is calculated from a one-dimensional map $f(\Delta^2 PM)$ stored in the ROM 106 by using the parameter $\Delta^2 PM$.

Then, at step 208, the fuel increment $\Delta TAU$ calculated at step 206 or 207 is stored in the RAM 107.

At step 209, the value PM0 is replaced by the current intake air pressure data PM, and at step 210, the value $\Delta PM0$ is replaced by the current primary differential value $\Delta PM$. The routine of Fig. 2 is completed by step 211.

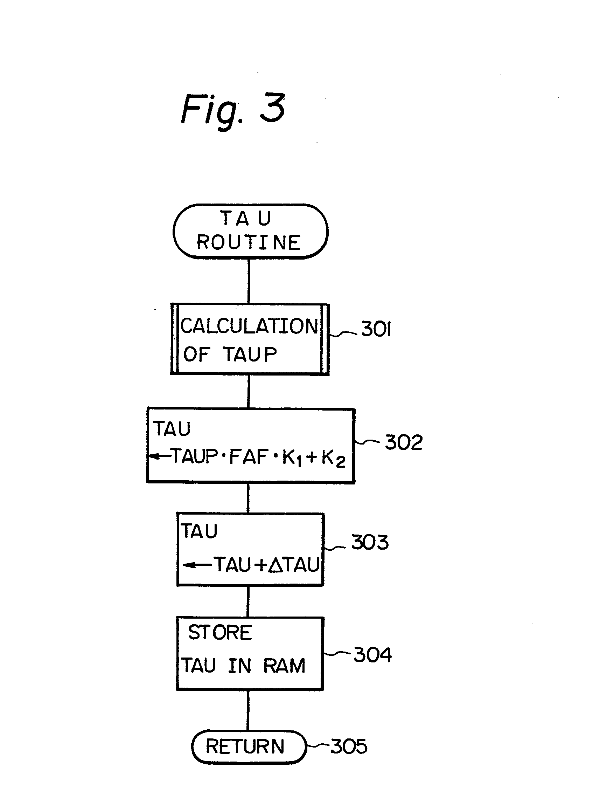

Figure 3 is a routine for calculating a fuel injection time period TAU executed at predetermined crank angles, in this case, 180°CA.

At step 301, a base fuel injection time period TAUP is calculated from a two-dimensional map stored in the ROM 106 by using the parameters PM and Ne. Then, at step 302, a fuel injection time period TAU is calculated by

$$TAU \leftarrow TAUP \cdot FAF \cdot K_1 + K_2$$

where FAF is an air-fuel ratio correction coefficient and $K_1$ and $K_2$ are correction factors determined by other parameters such as the signal of the intake air temperature sensor and the voltage of the battery (both not shown). At step 303, the fuel increment $\Delta TAU$ stored in the RAM 107 is added to TAU, i.e., $TAU \leftarrow TAU + \Delta TAU$. Then, at step 304, the calculated fuel injection time period TAU is stored on the RAM 107, and the routine of Fig. 3 is completed by step 305.

Figure 3 is a routine for controlling the fuel injection in accordance with the fuel injection time period TAU calculated by the routine of Fig. 2, executed at predetermined crank angles, also in this case, 180°CA.

At step 401, the fuel injection time period TAU stored in the RAM 107 is read out and is transmitted to a D register (not shown) included in the CPU 104. At step 402, an invalid fuel injection time period TAUV which is also stored in the RAM 107 is added to the content of the D register. In addition, at step 403, the current time CNT of the free-run counter of the timer counter 105 is read out and is added to the content of the D register, thereby obtaining an injection end time $t_e$ in the D register. Therefore, at step 404, the content of the D register is stored as the injection end time $t_e$ in the RAM 107.

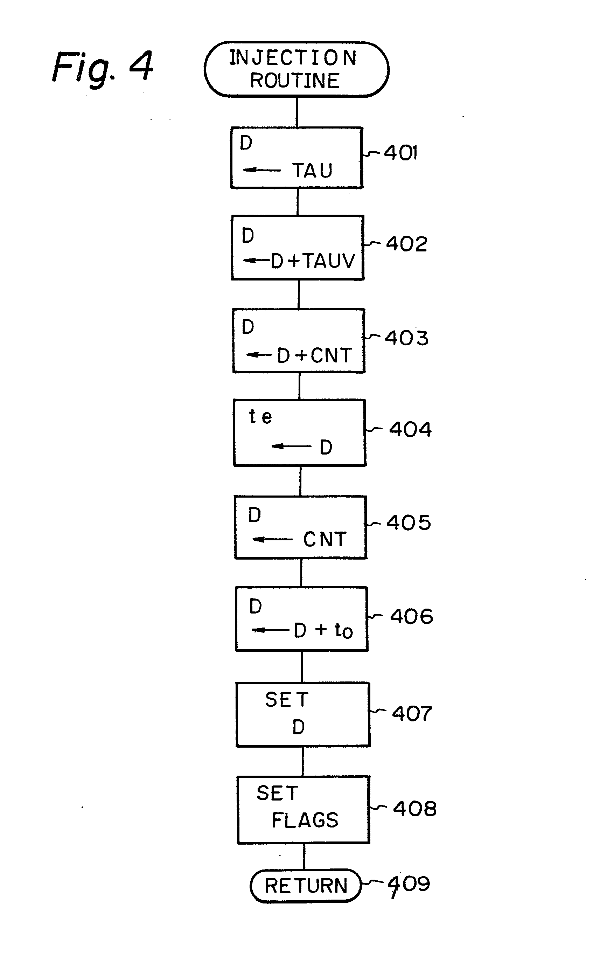

Again at step 405, the current time CNT of the free-run counter is read out and is set in the D register. Then, at step 406, a small time period $t_0$, which is definite or determined by the predetermined parameters such as PM and Ne, is added to the content of the D register. At step 407, the content of the D register is set in the compare register of the timer counter 105, and at step 1108, a fuel injection execution flag for a cylinder such as the first cylinder and a compare interrupt permission flag are set in the registers of the timer counter 105. The routine of Fig. 4 is completed by step 409.

Note that the timer counter 105 includes four flag registers for four cylinders. Therefore, at step 408 of Fig. 4, the CPU 104 may determine which cylinder is currently positioned for its suction stroke. For this purpose, the CPU 104 also includes a cylinder determination counter which counts up the pulse signals of the crank angle sensor 7 and is cleared when the output of the crank angle sensor 6 is high. For example, when the CPU 104 determines that the first cylinder is positioned for its suction stroke, the CPU 104 sets the fuel injection flag in the flag register for the first cylinder.

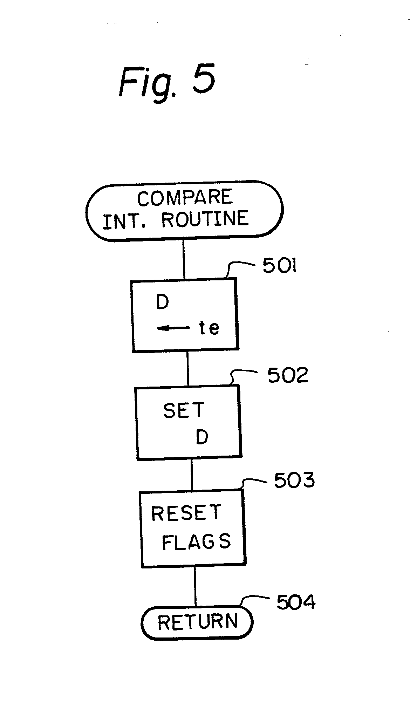

Thus, when the current time CNT of the free-run counter reaches the compare register, an injection-on signal due to the presence of the fuel injection execution flag for the first cylinder is transmitted from the time counter 105 via the I/O interface 102 to the driver circuit 103-1, thereby initiating fuel injection by the fuel injector 8-1. Simultaneously, a compare interrupt signal due to the presence of the compare interrupt permission flag is transmitted from the timer counter 105 to the CPU 104, thereby initiating a compare interrupt routine as illustrated in Fig. 5.

The completion of the fuel injection will be explained with reference to Fig. 5. At step 501, the injection end time $t_e$ stored in the RAM 107 is read out and is transmitted to the D register. Then, at step 502, the content of the D register, i.e., the injection end time $t_e$, is set in the compare register of the timer counter 105, and at step 503, the fuel injection execution flag for the first cylinder and the compare interrupt permission flag are reset. The routine of Fig. 5 is completed by step 504.

Thus, when the current time CNT of the free-run counter reaches the compare register, an injection-off signal due to the absence of the fuel injection execution flag for the first cylinder is transmitted from the timer counter 105 via the I/O interface 102 to the driver circuit 103-1, thereby ending the fuel injection by the fuel injector 8-1. In this case, however, no compare interrupt signal is generated due to the absence of the compare interrupt permission flag.

Thus, fuel injection of the fuel injector 8-1 is carried out for the time period TAU.

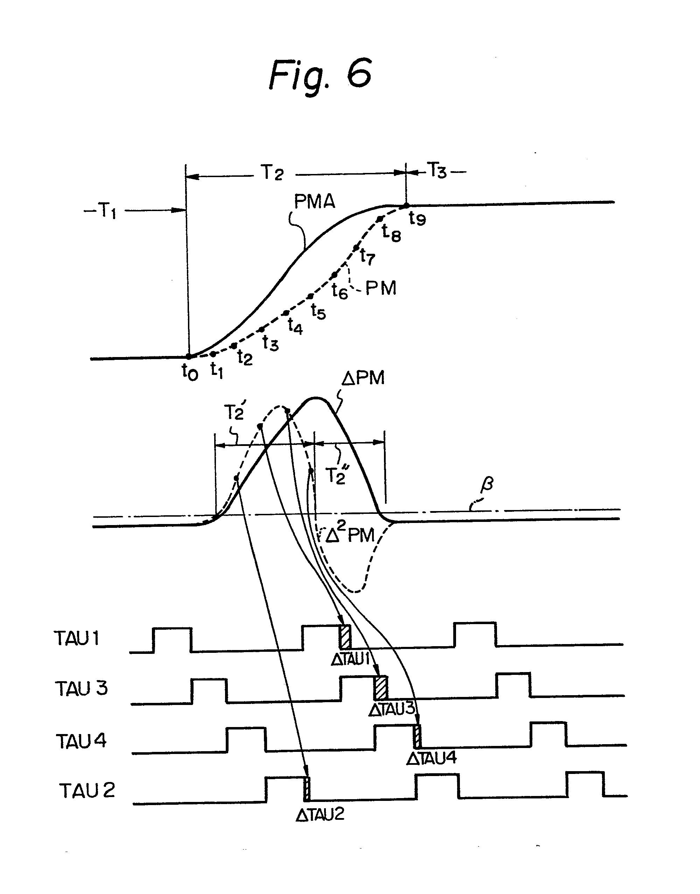

The operation as shown in Figs. 2 through 5 will be further explained with reference to Fig. 6. If the engine is in an acceleration mode, the actual intake air pressure rises as indicated by reference PMA, however, the intake air pressure data PM derived from the pressure sensor 4 rises with a delay as compared with the actual pressure PMA. That is, during a time period $T_1$ or $T_3$, there is no substantial difference between the actual pressure PMA and the pressure data PM, while during a time period $T_2$, there is a difference between the actual pressure PMA and the pressure data PM. In order to compensate for such a difference during an acceleration mode, a fuel increment is required. The primary differential value $\Delta$PM and the secondary differential value $\Delta^2$PM of the intake air pressure data PM derived from the pressure sensor 4 are shown in Fig. 6. According to the routine of Fig. 2 a fuel increment TAU which is not zero is calculated only when $\Delta$PM > $\alpha$ (=0) and $\Delta^2$PM > $\beta$.

In a sequential injection type engine, a fuel injection amount is calculated at a predetermined crank angle before the top dead center (TDC) of the suction stroke of each cylinder. Therefore, if there is some fuel increment within the latter half $T_2''$ of the acceleration mode time period as indicated by $T_2$, this fuel increment contributes to the injections executed within the time period $T_3$ after the acceleration mode. In order to avoid such a fuel increment, a fuel increment which is not zero is calculated only within the former half $T_2'$ ($\Delta$PM > 0 and $\Delta^2$PM > $\beta$) of the acceleration mode time period $T_2$. For example, a fuel increment $\Delta$TAU2 calculated at an A/D sampling timing $t_2$ contributes to the fuel amount TAU2 for the second cylinder; a fuel increment $\Delta$TAU1 calculated at an A/D conversion timing $t_3$ contributes to the fuel amount TAU for the first cylinder; a fuel increment $\Delta$TAU3 calculated at an A/D

conversion timing $t_4$ contributes to the fuel amount TAU3 for the third cylinder; and a fuel increment ΔTAU4 calculated at an A/D conversion timing $t_5$ contributes to the fuel amount TAU4 for the fourth cylinder. Thus, calculation of a fuel increment which is not zero is effective substantially only within the acceleration mode time period $T_2$.

Note that the present invention can be also applied to a fuel injection system using other parameters, such as the intake air amount and the engine rorational speed or the throttle opening value and the engine rotational speed.

As explained above, according to the present invention, when a fuel increment request due to the acceleration mode or the like occurs, no fuel increment injection is performed upon cylinders which do not require a fuel increment, thus improving the fuel consumption efficiency and also reducing the exhaust emissions.

## CLAIMS

1. A method for controlling the air-fuel ratio in a sequential injection type internal combustion engine having a plurality of cylinders, comprising the steps of:

calculating a fuel amount for each cylinder in accordance with first predetermined parameters at every predetermined crank angle;

calculating a fuel increment in accordance with a second predetermined parameter of said engine; and

calculating a fuel supply start timing and a fuel supply end timing for each cylinder in accordance with said fuel amount for the corresponding cylinder and said fuel increment currently calculated.

2. A method as set forth in claim 1, wherein said fuel increment calculating step comprises the steps of:

calculating a primary differential value of said second predetermined parameter;

determining whether or not said primary differential value is larger than a first definite value;

calculating a secondary differential value of said second predetermined parameter;

determining whether or not said secondary differential value is larger than a second definite value; and

calculating a fuel increment only when said first differential value is larger than said first definite value and said secondary differential value is larger than said second definite value.

3. A method as set forth in claim 2, wherein said fuel increment is dependent upon said secondary differential value.

4. A method as set forth in claim 2, wherein said first and second definite values are 0 and a positive value, respectively.

5. A method as set forth in claim 1, wherein said second predetermined parameter is the intake air pressure of said engine.

6. A method as set forth in claim 1, wherein said second predetermined parameter is the intake air amount of said engine.

7. A method as set forth in claim 1, wherein said second predetermined parameter is the opening of the throttle value of said engine.

8. An apparatus for controlling the air-fuel ratio in a sequential injection type internal combustion engine having a plurality of cylinders, comprising:

means for calculating a fuel amount for each cylinder in accordance with first predetermined parameters at every predetermined crank angle;

means for calculating a fuel increment in accordance with a second predetermined parameter of said engine; and

means for calculating a fuel supply start timing and a fuel supply end timing for each cylinder in accordance with said fuel amount for the corresponding cylinder and said fuel increment currently calculated.

9. An apparatus as set forth in claim 8, wherein said fuel increment calculating means comprises:

means for calculating a primary differential value of said second predetermined parameter;

means for determining whether or not said primary differential value is larger than a first definite value;

means for calculating a secondary differential value of said second predetermined parameter;

means for determining whether or not said secondary differential value is larger than a second definite value; and

means for calculating a fuel increment only when said first differential value is larger than said first definite value and said secondary differential value is larger than said second definite value.

10. An apparatus as set forth in claim 9, wherein said fuel increment is dependent upon said secondary differential value.

11. An apparatus as set forth in claim 9, wherein said first and second definite values are 0 and a positive value, respectively.

12. An apparatus as set forth in claim 8, wherein said second predetermined parameter is the intake air pressure of said engine.

13. An apparatus as set forth in claim 8, wherein said second predetermined parameter is the intake air amount of said engine.

14. An apparatus as set forth in claim 8, wherein said second predetermined parameter is the opening of the throttle valve of said engine.

## Fig. 1

0160949

**Fig. 2**

$$
\begin{array}{c}
\text{A/D CONVERSION} \\
\text{ROUTINE}
\end{array}
$$

FETCH PM — 201

$\Delta PM \leftarrow PM - PMO$ — 202

$\Delta PM > \alpha$ ? — 203

NO

YES

$\Delta^2 PM \leftarrow \Delta PM - \Delta PMO$ — 204

$\Delta^2 PM > \beta$ ? — 205

NO

YES

$\Delta TAU \leftarrow f(\Delta^2 PM)$ — 206

$\Delta TAU \leftarrow 0$ — 207

STORE $\Delta TAU$ IN RAM — 208

$PMO \leftarrow PM$ — 209

$\Delta PM \leftarrow PMO$ — 210

RETURN — 211

# Fig. 3

```
        ╭─────────────╮
        │   T A U     │
        │  ROUTINE    │
        ╰─────────────╯
              │
       ╔═════════════╗
       ║ CALCULATION ║──── 301
       ║ OF  TAUP    ║
       ╚═════════════╝
              │
       ┌─────────────┐
       │ TAU         │──── 302
       │ ←TAUP·FAF·K₁+K₂ │
       └─────────────┘
              │
       ┌─────────────┐
       │ TAU         │──── 303
       │ ←TAU+ΔTAU   │
       └─────────────┘
              │
       ┌─────────────┐
       │ STORE       │──── 304
       │ TAU IN RAM  │
       └─────────────┘
              │
        ╭─────────────╮
        │  RETURN     │──── 305
        ╰─────────────╯
```

Block 302: $TAU \leftarrow TAUP \cdot FAF \cdot K_1 + K_2$

Block 303: $TAU \leftarrow TAU + \Delta TAU$

*Fig. 4*

```
        ┌──────────────┐
        │  INJECTION   │
        │   ROUTINE    │
        └──────┬───────┘
               │
        ┌──────────────┐
        │ D            │ ─ 401
        │  ◄── TAU     │
        └──────┬───────┘
               │
        ┌──────────────┐
        │ D            │ ─ 402
        │ ◄─ D+TAUV    │
        └──────┬───────┘
               │
        ┌──────────────┐
        │ D            │ ─ 403
        │ ◄─ D+CNT     │
        └──────┬───────┘
               │
        ┌──────────────┐
        │ t e          │ ─ 404
        │    ◄── D     │
        └──────┬───────┘
               │
        ┌──────────────┐
        │ D            │ ─ 405
        │  ◄── CNT     │
        └──────┬───────┘
               │
        ┌──────────────┐
        │ D            │ ─ 406
        │  ◄── D + t₀  │
        └──────┬───────┘
               │
        ┌──────────────┐
        │   SET        │ ─ 407
        │   D          │
        └──────┬───────┘
               │
        ┌──────────────┐
        │   SET        │ ─ 408
        │   FLAGS      │
        └──────┬───────┘
               │
        ┌──────────────┐
        │   RETURN     │ ─ 409
        └──────────────┘
```

# Fig. 5

COMPARE
INT. ROUTINE

501

D
⟵ te

502

SET
D

503

RESET
FLAGS

504

RETURN

0160949

# Fig. 6